# EUROPÄISCHE PATENTANMELDUNG

(11) **EP 1 100 246 A2**
(43) Veröffentlichungstag der Anmeldung: **16.05.2001**
(21) Anmeldenummer: 00122885.7
(22) Anmeldetag: 20.10.2000
(51) Int. Cl.: H04M 3/523

(54) **Informationszentrale in einem Kommunikationsnetz und Verfahren zum Betrieb einer solchen**

(30) Priorität: 10.11.1999 DE 19954096
(71) Anmelder: SIEMENS AKTIENGESELLSCHAFT, 80333 München (DE)
(72) Erfinder: Rychly, Thomas, Ramsey, New Jersey 07446 (US)

(57) **Zusammenfassung**

Informationszentrale (CC) in einem Kommunikationsnetz (N), insbesondere Call Center, mit einer automatischen Vermittlungseinrichtung (V2) und einer Mehrzahl von an diese intern angeschlossenen Kommunikations-Endgeräten (E1, E2, E3), mit einem der Vermittlungseinrichtung zugeordneten Verbindungs-Speicher (Sp), einer dem Verbindungs-speicher zugeordneten Sucheinheit (Su) und einer mit der Sucheinheit verbundenen Vermittlungs-Steuereinheit (VSt) zur Steuerung einer Vermittlung des Kommunikationspartners an ein bestimmtes Endgerät.

## Beschreibung

Die Erfindung betrifft eine Informationszentrale in einem Kommunikationsnetz nach dem Oberbegriff des Anspruchs 1 - heue üblicherweise bezeichnet als Call Center sowie ein Verfahren zum Betrieb einer solchen nach Oberbegriff des Anspruchs 7.

Derartige Informationszentralen, die früher mit spezifischeren Aufgaben als telefonische Bestellannahme, telefonische Kundenbetreuung, Telefonberatung oder "Hotline" bezeichnet wurden und für die heute der zusammenfassende Begriff Call Center üblich ist, sind ein kundenorientierter, zentraler Bereich in einem Unternehmen (oder auch einer öffentlichen Einrichtung o.ä.) für ein- und ausgehende Informationen, in denen Kundenanfragen entgegen genommen und/oder Informationen abgesandt werden. In Kombination mit intelligenter Kommunikations- und Informationstechnik präsentiert das Call Center ein Unternehmen nach außen.

Die Call Center stellen einen höchst dynamischen Bereich des Dienstleistungssektors dar. Ihr Betrieb erfordert einen beträchtlichen Personalaufwand, und daher wird seit einiger Zeit verstärkt nach Rationalisierungs- und Automatisierungsmöglichkeiten gesucht. Hierzu gehört die Leitweglenkung eingehender Anrufe, auch bezeichnet als automatische Anrufverteilung (ACD = Automatic Call Distribution). In einem intelligenten Netz wird die Anrufverteilung durch einen Dienststeuerknoten (SCP = Service Control Point) ausgeführt. Hierbei wird der Anruf zu der - entsprechend der momentanen Verfügbarkeit - fachlich bestgeeigneten Bearbeitungsstelle innerhalb eines Pools grundsätzlich gleichwertiger Mitarbeiter des Call Centers (Call Center Agents) geleitet.

Es ist auch bekannt, zur Handhabung von Spitzenbelastungen eingehender Anrufe Warteschlangen (Queues) zu bilden, aus denen heraus eine Anrufverteilung erfolgt.

In der praktischen Arbeit von Call Centern tritt öfter das Problem auf, daß ein Anrufer mit einem Mitarbeiter ein bestimmtes Anliegen, beispielsweise eine Flug- oder Reisebuchung, besprochen hat und vor dem Abschluß des Informationsaustausches das Gespräch unterbrochen wird. Ruft der Kunde das Call Center nochmals an, wird sein Anruf wiederum durch die ACP gemanagt, und es besteht nur eine geringe Wahrscheinlichkeit, daß er wieder mit demjenigen Mitarbeiter verbunden wird, mit dem er den vorangehenden Informationsaustausch geführt hatte. Das zwingt in der Regel dazu, den Informationsaustausch weitgehend von vorn zu beginnen, was sowohl für den Kunden unangenehm als auch für das Call Center unrationell ist. Ein ähnliches Problem tritt auf, wenn ein Kunde nach dem regulären Abschluß eines Gespräches noch eine Rückfrage hat, die sich auf den konkreten Gesprächsinhalt bezieht. Auch in diesem Fall wird er in der Regel einem nicht mit der Sache vertrauten Mitarbeiter des Call Centers zunächst-bestimmte Fakten wiederholen müssen, ehe er eine Antwort auf seine Rückfrage bekommen kann. Neben der notwendigen Mehrarbeit im Call Center stellt hierbei insbesondere die Verärgerung der Kunden einen erheblichen Nachteil dar.

Der Erfindung liegt daher die Aufgabe zugrunde, eine verbesserte Informationszentrale bzw. ein verbessertes Verfahren zum Betrieb einer solchen anzugeben, mit denen die Arbeitsabläufe in Call Centern effizienter gestaltet und die Kundenbeziehungen weiter verbessert werden können.

Diese Aufgabe wird hinsichtlich ihres Vorrichtungsaspektes gelöst durch eine Informationszentrale mit den Merkmalen des Anspruchs 1 und hinsichtlich ihres Verfahrensaspektes durch ein Verfahren mit den Merkmalen des Anspruchs 8.

Die Erfindung schließt den grundlegenden Gedanken ein, die automatische Anrufverteilung so auszubilden, daß ein Anrufer, dessen Gespräch mit dem Call Center unterbrochen wurde oder der relativ kurz nach Beendigung seines Gespräches erneut anruft, mit demselben Arbeitsplatz verbunden wird, mit dem das vorangehende Gespräch abgewickelt wurde. Sie schließt weiter den Gedanken ein, hierzu eine Speicherung der Anrufer-Rufnummern über einen bestimmten Zeitraum vorzunehmen und bei jedem neu ankommenden Ruf einen Vergleich der Anrufer-Rufnummer mit den gespeicherten Rufnummern daraufhin vorzunehmen, ob sie unter den gespeicherten Rufnummern enthalten ist. Schließlich schließt die Erfindung den Gedanken ein, die Speicherung der Anrufer-Rufnummern jeweils in Zuordnung zur internen Rufnummer des Mitarbeiter-Platzes vorzunehmen, mit dem der entsprechende Ruf verbunden wurde.

Dieses auf ein Telefonnetz bezogene Vorgehen ist analog bei einem Datennetz zu praktizieren, wenn an die Stelle der Rufnummer die Datennetzadresse eines Kommunikationspartners gesetzt wird, beispielsweise dessen Internet-Adresse.

In einer bevorzugten Ausführungsform ist den Endgeräten der einzelnen Agenten bzw. Operatoren jeweils eine Warteschlangeneinrichtung zugeordnet, und die Steuereinheit der vorgeschlagenen Anordnung ist zur Vermittlung des Kommunikationspartners in die Warteschlangeneinrichtung ausgebildet, falls das Endgerät besetzt ist, mit dem er im Ergebnis der Auswertung des Verbindungs-Speichers verbunden werden soll. Dabei wird der erneut zu verbindende Kommunikationspartner in einer weiter bevorzugten Ausführung an den Beginn der Warteschlange gesetzt, damit die Gesprächspause zwischen ihm und dem zuständigen Agenten möglichst kurz ist und möglichst wenig Information aus der vorausgegangenen Verbindung in Vergessenheit gerät.

Ein Merkmal einer weiteren bevorzugten Ausführung ist einerseits, daß jedem Endgerät eine Vermittlungs-Sperreinrichtung zugeordnet ist, die einen Verbindungsaufbau durch die Vermittlungseinrichtung mit diesem Endgerät verhindert - beispielsweise während der sogenannten Nachbearbeitungszeit, während derer der Agent die letzte Aufgabe oder letzten Aufgaben während seines Dienstes abschließt. Anderseits ist diese Sperreinrichtung durch die Vermittlungs-Steuereinheit mindestens für den vorbestimmten Zeitraum der Nachbearbeitungszeit deaktivierbar. Trifft also beim Call Center ein erneuter Anruf eines früheren Anrufers (oder eine weitere E-Mail eines früheren Absenders) während der Nachbearbeitungszeit des früher zuständigen Agenten ein, so wird die Verbindung ausnahmsweise und sofort zu diesem durchgeschaltet, sodaß er die mit dem Kommunikationspartner begonnene Aufgabe zu Ende führen kann.

Das Kommunikationsnetz weist insbesondere ein intelligentes Netz auf, und die Vermittlungsstelle ist dann als Dienststeuerknoten desselben ausgebildet, wobei der Verbindungsspeicher in einer diesem zugeordneten Datenbasis realisiert ist. Die Erfindung ist aber auch in einem herkömmlichen analogen oder digitalen Telefonnetz im Rahmen einer Nebenstellenanlage mit einer Mehrzahl von Nebenstellen an Arbeitsplätzen der Agenten ausführbar.

In einer weiteren Variante ist das Kommunikationsnetz ein Datennetz, und die Vermittlungseinrichtung ist als Server eines an das Datennetz angeschlossenen lokalen Netzes (LAN) ausgebildet. Weiterhin ist es möglich, die Erfindung im Rahmen einer Verknüpfung zwischen Telefonnetz und Datennetz zu realisieren, indem die Agenten sowohl über ein Endgerät des Telefonnetzes als auch ein Datenterminal (PC) verfügen und die Vermittlungseinrichtung zur Vermittlung von im Telefonnetz oder Datennetz ankommenden Nachrichten (Anrufe bzw. E-Mails) ausgebildet ist.

Zur Verhinderung von persönlichen Belästigungen besteht in einer weiteren bevorzugten Ausführung die Möglichkeit, daß jeder Agent des Call Center als sogenannte "Blacklist" eine Liste derjenigen Anrufer-Rufnummern speichert - bzw. derartige Blacklists der einzelnen Agenten bei der Vermittlungseinrichtung gespeichert sind -, die nicht erneut bzw. künftig überhaupt nicht mehr mit ihm verbunden werden sollen.

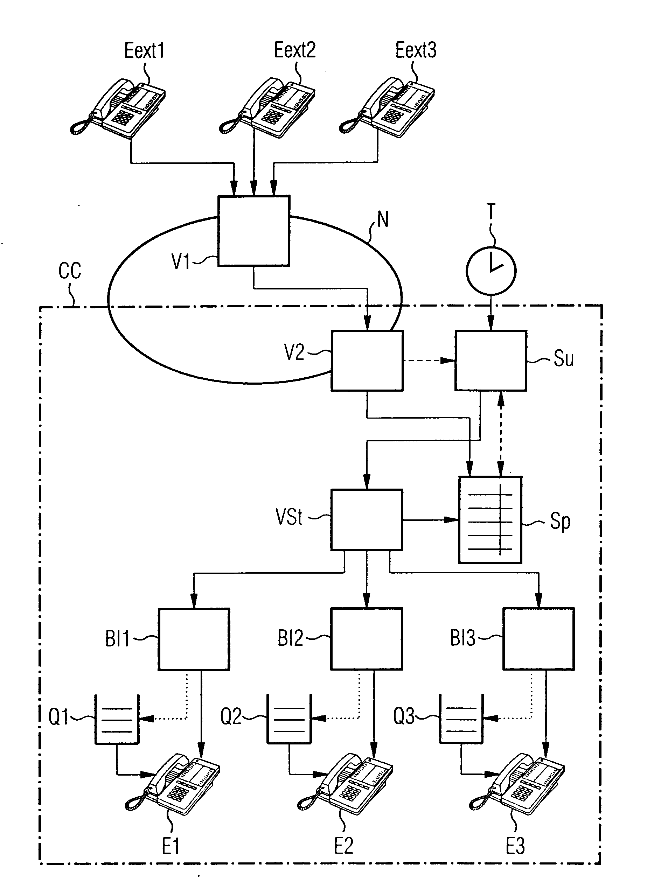

Vorteile und Zweckmäßigkeiten der Erfindung ergeben sich im übrigen aus den Unteransprüchen sowie der nachfolgenden Beschreibung eines bevorzugten Ausführungsbeispiels anhand der Figur.

Die Figur zeigt in schematischer Darstellung der wesentlichen Funktionseinheiten ein Call Center CC vom Inbound-Typ, das primär zur Entgegennahme und Bearbeitung von an ein Unternehmen gerichteten Kundenanfragen bestimmt ist, in einem öffentlichen Kommunikationsnetz N. Es ist gezeigt, daß an das Kommunikationsnetz N über eine erste Vermittlungsstelle V1 eine Mehrzahl von externen Endgeräten Eextl, Eext2, Eext3 ... angeschlossen ist. Die Vermittlungsstelle V1 steht in Verbindung mit einer Vermittlungseinrichtung V2 des Call Center CC.

Letztere ist zum Einspeichern von CLI anrufender Kunden direkt mit einem nach dem FIFO(First-In-First-Out)-Prinzip organisierten Verbindungs-Speicher SP verbunden, dessen Haltezeit über einen Zeitgeber T vorbestimmt wird. Andererseits ist die Vermittlungseinrichtung V2 mit einer Sucheinheit Su verbunden, welche bei Zustandekommen jeder neuen Verbindung ein Aktivierungssignal von der Vermittlungseinrichtung V2 erhält. Im Ansprechen auf dieses Aktivierungssignal, mit dem zusammen die CLI des neuen Anrufers übermittelt wird, durchsucht die Sucheinrichtung Su den Speicherinhalt des Verbindungs-Speichers Sp daraufhin, ob diese CLI im vorbestimmten Zeitraum bereits früher eingespeichert wurde.

Ist dies der Fall, so wird die entsprechende Speicherzeile aus dem Verbindungs-Speicher Sp über die Sucheinheit Su an eine der Vermittlungseinrichtung V2 zugeordnete Vermittlungs-Steuereinrichtung VSt übergeben. Dabei ist anzumerken, daß die entsprechende Speicherzeile nicht nur die CLI des gesuchten Anrufers, sondern in Zuordnung zu dieser auch die interne Rufnummer eines Agenten des Call Center enthält, mit dem der Anrufer früher verbunden worden war. Mit der Ausgabe der erwähnten Speicherzeile aus dem Verbindungs-Speicher Sp erhält also die Vermittlungs-Steuereinrichtung VSt eine Steuerinformation darüber, mit welchem der angeschlossenen Endgeräte E1, E2 oder E3 der Anrufer bei seinem erneuten Anruf zu verbinden ist - nämlich mit demjenigen, mit dem er bei der ersten Verbindungsaufnahme verbunden worden war.

In der Figur ist dargestellt, daß den Endgeräten E1, E2 und E3 jeweils eine Vermittlungs-Sperreinrichtung Bll, B12 bzw. B13 vorgeschaltet ist, die im eingeschalteten Zustand die Herstellung einer Verbindung bei einem normal über die Vermittlungseinrichtung V2 vermittelten Ruf verhindern würden. Bei Vermittlung eines über die Vermittlungs-Steuereinrichtung VSt aufgrund eines positiven Vergleichsergebnisses mit dem Speicherinhalt des Verbindungs-Speichers Sp vermittelten Anrufes wird die Vermittlungs-Sperreinrichtung des entsprechenden Endgerätes jedoch deaktiviert, sodaß die Verbindung des einen erneuten Anruf tätigenden Anrufers mit "seinem" Agenten dennoch hergestellt wird.

In der Figur ist auch symbolisch dargestellt, daß bei den einzelnen Endgeräten E1, E2 und E3 des Call Center jeweils eine individuelle Warteschlange Q1, Q2 bzw. Q3 etabliert sein kann und daß - was in der Figur mit einer punktierten Linie bezeichnet ist - durch die Vermittlungs-Steuereinrichtung VSt ein Wiederholungs-Ruf in die jeweilige Warteschlange mit Priorität (beispielsweise an die erste Stelle) eingegliedert wird.

Die Ausführung der Erfindung ist nicht auf dieses Beispiel beschränkt, sondern ebenso in einer Vielzahl von Abwandlungen möglich, die im Rahmen fachmännischen Handelns liegen.

So ist sie insbesondere auch im Rahmen eines Datennetzes - beispielsweise des Internet - möglich, wobei die Vermittlungseinrichtung des Call Center als Server und die Endgeräte der einzelnen Agenten als PCs, Laptops o.ä. ausgeführt sind. Hier werden E-Mails auf grundsätzlich dieselbe Art gehandhabt, wie dies oben für Kundenanrufe beschrieben wurde. In einer vorteilhaften Variante ist das Call Center so organisiert, daß mit einer Einbindung in ein öffentliches Telefonnetz (Festnetz oder Mobilfunknetz) einerseits und der Einbindung in das Internet andererseits sowohl für Kundenanrufe als auch für E-Mails die vorgeschlagene Betriebsweise praktiziert und damit eine effiziente Bearbeitung sowohl von telefonischen Anfragen als auch von E-Mails gesichert werden kann.

## Patentansprüche

1. Informationszentrale (CC) in einem Kommunikationsnetz (N), insbesondere Call Center, mit einer eine externe Kommunikationsadresse aufweisenden automatischen Vermittlungseinrichtung (V2) und einer Mehrzahl von an diese intern angeschlossenen Kommunikations-Endgeräten (E1, E2, E3), die jeweils eine spezifische interne Kommunikations-Adresse aufweisen,
**gekennzeichnet durch**
- einen der Vermittlungseinrichtung zugeordneten Verbindungs-Speicher (Sp) zur Abspeicherung einer vorbestimmten Anzahl von Verbindungen oder der in einem vorbestimmten Zeitraum zustandegekommenen Verbindungen mit tabellarischer Zuordnung einer Kommunikationspartner-Adresse und der internen Adresse des Endgeräts, mit dem der jeweilige Kommunikationspartner verbunden wurde,
- eine dem Verbindungs-Speicher zugeordnete und bei jeder neuen Verbindungsaufnahme durch einen Kommunikationspartner aktivierte Sucheinheit (Su) zum Durchsuchen des Verbindungs-Speichers nach der Adresse des die Verbindung aufnehmenden Kommunikationspartners und zur Ausgabe der entsprechenden Speicherzeile bei Erhalt eines positiven Suchergebnisses und
- eine mit der Sucheinheit verbundene Vermittlungs-Steuereinheit (VSt) zur Steuerung einer Vermittlung des Kommunikationspartners an das in der ausgegebenen Speicherzeile angegebene Endgerät bei Vorliegen eines positiven Suchergebnisses.

2. Informationszentrale nach Anspruch 1,
**dadurch gekennzeichnet**, daß
jedem Endgerät (E1, E2, E3) eine Warteschlangeneinrichtung (Q1, Q2, Q3) zugeordnet ist und die Vermittlungs-Steuereinheit (VSt) zur Vermittlung des Kommunikationspartners in die Warteschlangeneinrichtung ausgebildet ist, falls das angegebene Endgerät besetzt ist.

3. Informationszentrale nach Anspruch 2
**dadurch gekennzeichnet**, daß
die Vermittlungs-Steuereinheit (VSt) den aufgrund des positiven Suchergebnisses zu vermittelnden Kommunikationspartner an den Beginn der Warteschlange (Q1, Q2, Q3) setzt.

4. Informationszentrale nach einem der vorangehenden Ansprüche,
**dadurch gekennzeichnet**, daß
jedem Endgerät eine Vermittlungs-Sperreinrichtung (Bll, B12, B13) zugeordnet ist, welche durch die Vermittlungs-Steuereinheit (VSt) deaktivierbar ist derart, daß bei Vorliegen eines positiven Suchergebnisses eine Vermittlung des entsprechenden Kommunikationspartners an das angegebene Endgerät (E1, E2, E3) ausgeführt wird.

5. Informationszentrale nach einem der vorangehenden Ansprüche,
**dadurch gekennzeichnet**, daß
das Kommunikationsnetz (N) ein intelligentes Netz aufweist und die Vermittlungseinrichtung (V2) als Dienststeuerknoten desselben und der Verbindungs-Speicher (Sp) in einer dem Dienststeuerknoten zugeordneten Datenbasis realisiert ist.

6. Informationszentrale nach einem der Ansprüche 1 - 4,
**dadurch gekennzeichnet**, daß
die Informationszentrale (CC) eine Nebenstellenanlage mit einer Mehrzahl von Nebenstellen als Endgeräten (E1, E2, E3) aufweist.

7. Informationszentrale nach einem der vorangehenden Ansprüche,
**dadurch gekennzeichnet**, daß
das Kommunikationsnetz (N) ein Datennetz aufweist und die Vermittlungseinrichtung (V2) als Server eines an das Datennetz angeschlossenen lokalen Netzes ausgebildet ist.

8. Verfahren zum Betrieb einer Informationszentrale (CC) in einem Kommunikationsnetz (N), insbesondere eines Call Center, mit einer eine externe Kommunikations-Adresse aufweisenden automatischen Vermittlungseinrichtung (V2) und einer Mehrzahl von an diese intern angeschlossenen Kommunikations-Endgeräten (E1, E2, E3), die jeweils eine spezifische interne Kommunikations-Adresse aufweisen,
**dadurch gekennzeichnet**, daß
- bei der Vermittlungseinrichtung eine vorbestimmte Anzahl von Verbindungen oder alle in einem vorbestimmten Zeitraum zustande gekommenen Verbindungen unter tabellarischer Zuordnung einer Kommunikationspartner-Adresse und der internen Adresse desjenigen Endgeräts abgespeichert werden, mit dem der jeweilige Kommunikationspartner verbunden wurde,
- bei jedem neuen Verbindungsaufbau eine Prüfung der abgespeicherten Verbindungen daraufhin vorgenommen wird, ob die Adresse des die Verbindung aufbauenden Kommunikationspartners bereits abgespeichert ist,
- bei positivem Suchergebnis die interne Adresse des dem Kommunikationspartners bei der früheren Verbindung zugeordneten Endgerätes ausgegeben und
- eine Vermittlung des Kommunikationspartners an dieses Endgerät gesteuert wird.

9. Verfahren nach Anspruch 8,
**dadurch gekennzeichnet**, daß
der Kommunikationspartner in eine bei demjenigen Endgerät (E1, E2, E3), an das er verbunden werden soll, aufgebaute Warteschlange (Q1, Q2, Q3) vermittelt wird, falls dieses Endgerät besetzt ist.

10. Verfahren nach Anspruch 9,
**gekennzeichnet dadurch**, daß
der aufgrund eines positiven Suchergebnisses zu vermittelnde Kommunikationspartner an den Beginn der Warteschlange (Q1, Q2, Q3) gesetzt wird.

11. Verfahren nach einem der Ansprüche 7 - 10,
**dadurch gekennzeichnet**, daß
ein aufgrund des positiven Suchergebnisses zu vermittelnder Kommunikationspartner mit dem jeweiligen Endgerät (E1, E2, E3) auch dann verbunden wird, wenn dieses für neue Verbindungen zeitweilig gesperrt ist.

12. Verfahren nach einem der Ansprüche 7 - 11,
**dadurch gekennzeichnet**, daß
die Vermittlung mindestens eines Kommunikationspartners mit einer Kommunikations-Adresse an ein vorbestimmtes Endgerät (E1, E2, E3) sperrbar ist.
